# EUROPÄISCHE PATENTANMELDUNG

(11) **EP 2 674 264 A2**
(43) Veröffentlichungstag der Anmeldung: **18.12.2013**
(21) Anmeldenummer: 13172056.7
(22) Anmeldetag: 14.06.2013
(51) Int. Cl.: B25J 15/04

(54) **Roboter mit Werkzeugwechsler**

(30) Priorität: 15.06.2012 DE 102012105241
(71) Anmelder: Hitec Zang GMBH, 52134 Herzogenrath (DE)
(72) Erfinder: Zang, Werner, 52134 Herzogenrath (DE)
(74) Vertreter: Fitzner, Uwe

(57) **Zusammenfassung**

Die Erfindung betrifft einen Roboter, umfassend einen Werkzeugaufnehmer und Werkzeug dadurch gekennzeichnet, dass diese mit mindestens zwei Stiften verbunden sind, die als Kupplungselement sowie gleichzeitig als elektrische Kontakte dienen. (Fig. 1)

## Beschreibung

Die Erfindung betrifft einen Roboter, umfassend einen Werkzeugaufnehmer und Werkzeug dadurch gekennzeichnet, dass diese mit mindestens zwei Stiften verbunden sind, die als Kupplungselement sowie gleichzeitig als elektrische Kontakte dienen, sowie gegebenenfalls eine glatte, ebene Bodenplatte mit magnetischem Fixierungssystem, eine Kippvorrichtung, einen Universalfeststoffmanipulator, Magnethalterungen, Ventile ohne Stellgerät, Absaugvorrichtung, passive Drehvorrichtung für Werkzeuge und/oder passive Kippvorrichtung für Werkzeuge sowie weitere Werkzeuge und beliebige Kombinationen davon.

Mikrotitelplatten, die zwischen den Messungen gerüttelt oder geschwenkt werden, sind aus der DE 43 06 586 A1 bekannt.

Aus der US 5,145,227 A ist ein Adapter zwischen einem Roboterarm und einer Nutzlast für den Einsatz im Weltraum bekannt. Der Adapter enthält eine doppeltoleranten, elektromagnetischen Befestigungsmechanismus und in einer Ausführung einen Stift zur Fixierung der Nutzlast, der an eine Antriebswelle mit bidirektionalem Motor befestigt ist. Als zweite Halterung der Nutzlast dient ein elektrischer Verbinder, der eine Vielzahl von Pins enthält und an ein entsprechendes Gegenstück an der Nutzlast gekoppelt wird.

In den letzten Jahren wurden zur Steigerung der Produktivität Roboter verstärkt eingesetzt, sowohl in der Produktion als auch im Labor, z.B. zur Parallelsynthese oder Analyse. Durch diese Automatisierung soll zusätzlich die Präzision der Ergebnisse erhöht werden sowie Fehler vermieden werden. Um die Einsatzmöglichkeiten eines Roboters zu erhöhen, sind unterschiedliche Nebenaggregate wie z.B. Werkzeugwechsler, Ventile, Kippvorrichtungen oder Magazine notwendig. Diese haben alle eigene Antriebe, wodurch das Gewicht erhöht, zusätzlicher Platz notwendig, zusätzliche Elektronik notwendig und verstärkt Wärme erzeugt werden. Ferner wird dadurch auch die Komplexität der Roboter erhöht. Dies resultiert u.a. in einer Vielzahl von Leitungen und Kabeln, die zur Steuerung und Aufrechterhaltung des Betriebes notwendig sind. Andererseits verstärkt sich dadurch auch die Anfälligkeit der Roboter bezüglich Fehler und Ausfällen.

Aufgabe der vorliegenden Erfindung ist es, einen Roboter zur Verfügung zu stellen, der mit geringem Aufwand möglichst viele unterschiedliche Aufgaben erfüllen kann. Es soll mit geringem Aufwand bezüglich Material und Energieverbrauch sowie zur Steuerung der Werkzeuge ein Roboter zur Verfügung gestellt werden, der robust ist, keine mechanisch bewegten Teile zur Arretierung der Werkzeuge benötigt, einfach zu handhaben ist, von geringem Gewicht, so dass er kostengünstig herzustellen und platzsparend einsetzbar ist.

Diese Aufgabe wird erfüllt durch einen Roboter, umfassend einen Werkzeugaufnehmer und Werkzeug dadurch gekennzeichnet, dass diese durch mindestens zwei Stiften aus elektrisch leitfähigem Material verbunden sind, die als Kupplungselement sowie gleichzeitig als elektrische Kontakte dienen.

In einer Ausführung der Erfindung werden Werkzeugaufnehmer und Werkzeug durch genau zwei Stiften verbunden, die als Kupplungselement und gleichzeitig als elektrische Kontakte dienen.

In einer Ausführung der vorliegenden Erfindung sind die Stifte Bolzen, aber auch andere Ausführungen beziehungsweise Formen sind möglich.

In einer weiteren Ausführung wird das Werkzeug in der Arbeitsposition durch Haftmagnete an dem Werkzeugaufnehmer gesichert.

In einer weiteren Alternative ist eine Pneumatikkupplung in dem Werkzeugaufnehmer und dem Werkzeug integriert, die z.B. die Luft zum Ansaugen und Ausstoßen von Flüssigkeit durch eine Pipette zum Werkzeug leitet.

Die ruhenden Werkzeuge werden auf einer Parkposition abgelegt.

In einer weiteren Ausführungsform sind die Stifte Teil eines Zweileiter-Bussystems mit Energieübertragung.

In dem erfindungsgemäßen Aufbau besitzt der Werkzeugwechsler keine empfindlichen Teile wie z.B. konventionelle Steckkontakte. Da die Kontaktierung über die Kupplungselemente, ohne zusätzliche elektrische Kontakte erfolgt, ist lediglich die minimale Anzahl von nur zwei bewegten Leitungen notwendig. Für die Energieversorgung des Werkzeugs wird eine Gleich- oder Wechselspannung permanent zwischen den beiden Busleitungen angelegt.

In einer weiteren Ausführung der Erfindung hat der Roboter keine mechanisch bewegten Teile zur Arretierung der Werkzeuge.

Die übertragene Information wird in einer Ausführung durch ein Modulationsverfahren der Versorgungsspannung überlagert. Dabei sorgen jeweils ein Sender und ein Empfänger auf dem Werkzeug und in der Roboterelektronik für eine bidirektionale Übertragung.

In einer Variante wird die Information drahtlos durch elektromagnetische Wellen wie z.B. Funk oder Infrarot, übertragen.

In einer weiteren Ausführung kann die Energieversorgung durch Akkumulatoren auf den Werkzeugen erfolgen, die in der Parkposition nachgeladen werden. In diesem Fall erfolgt die Datenübertragung bevorzugt drahtlos.

In einer Ausführung der vorliegenden Erfindung handelt es sich um einen Laborroboter.

In einer weiteren Ausführung wird der erfindungsgemäße Roboter bei Temperaturen zwischen -20 und + 100°C eingesetzt, bevorzugt zwischen 0 und 40°C, besonders bevorzugt bei Raumtemperatur eingesetzt. In einer solchen Ausführung sind auch alle notwendigen Leitungen, Kabel, Schläuche, Verbindungen etc. für diesen Temperaturbereich ausgelegt. Dadurch wird eine deutliche Kostenersparnis gegenüber der Verwendung von Materialien bei extrem tiefen oder hohen Temperaturen wie z.B. unterhalb von -50°C oder oberhalb von 100°C erreicht und gewährleistet.

In einer Ausführung der Erfindung wird der Roboter auch bei Temperaturen zwischen 0 und 10°C eingesetzt, wie z.B. in Kühlräumen, besonders bevorzugt 0-6 bzw. 4°C.

In einer Ausführung der Erfindung wird der Roboter auch bei Temperaturen zwischen 35 und 40°C eingesetzt, wie z.B. in der Zellkulturtechnik, besonders bevorzugt bei 37°C.

In einer Ausführung besitzt der Roboter eine Bodenplatte die eine feste, glatte und spaltfreie Oberfläche hat.

Ein weiterer Gegenstand der Erfindung betrifft einen Roboter umfassend eine Kippvorrichtung für Gefäße, die durch den Roboter betätigt werden. Im Falle eines Laborroboters handelt es sich bei den Gefäßen bevorzugt um Mikrotiterplatten (MTP).

In einer Ausführung besteht die Kippvorrichtung aus einer Grundplatte mit seitlichen und rückwärtigen Arretierungsnippeln, welche das Gefäß fixieren. Ferner besitzt die Kippvorrichtung einen Hebel der durch den Roboterarm angefahren wird und mittels des Hebewerkzeuges in vertikale Richtung verschoben wird. In den Aussparungen können Magnete vorhanden sein, die zusammen mit Gegenmagneten unterhalb der Arbeitsplatte des Roboters die Kippvorrichtung in Position halten.

In einer weiteren Ausführung ist die Kippvorrichtung aus einer Grundplatte (13) mit seitlichen (11) und rückwärtigen (14) Arretierungsnippeln versehen die zum Fixieren und Führen der Mikrotiterplatten dienen. Ferner ist die Kippvorrichtung mit einem Heber (8) versehen, an welchem das Werkzeug (16) angreift.

In einer Alternative ist die die Grundplatte der Kippvorrichtung mit Magneten (12) versehen ist, und wird mittels Gegenmagneten in der Grundplatte des Roboters fixiert.

In einer Ausführung des Roboters mit Kippvorrichtung werden die Behälter mittels eines aus der Arbeitsplatte herausfahrenden Bolzens gekippt.

In einer weiteren Alternative besteht die Kippvorrichtung aus einem Podest, auf welchem die Behälter mittels eines Grippers aufgesetzt werden, so dass sie schräg stehen.

Weiterer Gegenstand der Erfindung ist eine glatte, ebene und spaltfreie Bodenplatte, Diese weist keine mechanischen Befestigunselemente auf. Die zu bearbeitenden Gefäße oder Vorrichtungen werden mit magnetischen Mitteln auf der Bodenplatte fixiert oder gehalten. Hierzu können die Bodenplatte oder die Gefäße oder Vorrichtungen mit Magneten versehen werden, die das Fixierungssystem darstellen. Magnetische Mittel können auch Magnet und erromagnetisches Material. In einer Ausführung ist die Bodenplatte an der Unterseite mit Permanentmagneten oder ferromagnetischem Material in einem Raster (19) versehen, welches dieselben Rastermaße besitzt wie die Permanentmagnete oder ferromagnetisches Material fixiert an den Unterseiten der zu bearbeitenden Gefäße oder Vorrichtungen.

In einer Ausführung wird der Heber über eine feststehende Reibplatte an der obersten Position gehalten und somit auch das Gefäß in gekippter Lage. Die Platte übt eine konstante Reibkraft aus, die z.B. durch Federkraft induziert wird.

Die Platte, welche den Heber in Position hält, kann aus Metall, bevorzugt aus Kunststoff, sein.

Somit ist die erfindungsgemäße Kippvorrichtung robust, einfach und kostengünstig und ermöglicht die vollständige Entleerung der Gefäße durch Absaugen z.B. mit einer Pipettenspitze.

In einer weiteren Variante wird das Kippen der Kippvorrichtung oder unmittelbar des Gefäßes von einem von unten durch die Arbeitsplatte auffahrenden Bolzen unterstützt oder unmittelbar hervorgerufen.

In einer weiteren Ausführung erfolgt der Kippvorgang durch Aufsetzen des Gefäßes mittels eines Grippers (Greifer) auf einem oder mehreren Bolzen, so dass es in Schräglage arretiert.

Gegenstand der Erfindung ist auch ein Roboter umfassend einen Universalfeststoffmanipulator mit einem Feststoffaufnehmer in Form eines Spatels, wobei der Feststoffmanipulator in bis zu sechs, bevorzugt sechs Achsen bewegt werden kann.

Der Begriff Spatel im Sinne der vorliegenden Erfindung umfasst alle möglichen Formen von Spatel bis hin zu einer löffelförmigen Ausführung. Im Sinne der Erfindung umfasst der Begriff Spatel verschiedene Ausführungsformen, wie zum Beispiel Präpariersonden, Präpariernadel, Spatel, löffelförmige Spatel, Löffel, Siebe, bevorzugt Instrumente wie sie in dem Katalog der Firma Carl Roth 2012 (Seiten 201-213) zu finden sind.

In einer Ausführung werden durch Messung des von den Antrieben aufgenommenen elektrischen Stroms die Kräfte zur Manipulation des Feststoffes kontrolliert.

In einer Variante ist der Feststoffmanipulator mit einem Sensor zur Kontrolle der Kräfte bei der Manipulation der Feststoffe versehen.

Herkömmliche Feststoffdosierer erreichen nicht die Möglichkeiten, die bei einer manuellen Handhabung von Feststoffen z.B. mit Hilfe eines Löffels oder Spatels gegeben sind.

Ein herkömmlicher Feststoffdosierer hat ein Vorlagengefäß in welchem sich der zu dosierende Feststoff befindet. Der Dosierer kann dann definierte Mengen in ein Gefäß abgeben.

Dabei werden eine Vielzahl von Verfahren angewendet, von der Schnecke bis zur Zellenschleuse.

Bekannte Feststoffdosierer sind stets nur für eine eingeschränkte Anzahl von Feststoffarten geeignet, z.B. Kristalle einer bestimmten Größe oder Pulver einer bestimmtem Körnung. Auch ist das Umfüllen von einem freiwählbaren Gefäß in ein frei wählbares Zielgefäß nicht möglich. Ferner können schwierige Feststoffe die stark verklumpen oder mit einem hohem Wasser- oder Bindemittel- oder Faseranteil nicht zufriedenstellend dosiert werden.

Der erfindungsgemäße Feststoffmanipulator bietet alle Möglichkeiten eines manuellen Verfahrens. Das Feststoffaufnehmerelement kann typisch in 6 Achsen bewegt werden. Damit kann es z.B. wie beim manuellen Arbeiten mit dem Löffel in ein schräg angeordnetes Gefäß fahren, ggf. durch geeignete Bewegung den Feststoff auflockern, eine Menge entnehmen, Überstand abschütteln zum Zielgefäß fahren und dort den Feststoff durch Drehen des Löffels abgeben oder falls erforderlich auch abstreifen. Die Kontrolle der dem Vorlagengefäß entnommenen Menge kann durch eine Waage am Vorlagengefäß erfolgen. Die Kontrolle der in das Zielgefäß eingefüllten Menge kann durch eine Waage am Zielgefäß erfolgen.

Durch Messung des von den Antrieben aufgenommenen elektrischen Stromes können die Kräfte, z.B. beim Aufrühren des Feststoffs oder beim Abstreifen kontrolliert werden.

Gegenstand der vorliegenden Erfindung ist ferner ein oben beschriebener Roboter mit einer Arbeitsplatte mit bevorzugt harterOberfläche. Harte Oberflächen im Sinne der Erfindung sind z.B. Metalle, Stahl, Aluminium, Kacheln, Fliesen, Keramik, Glas, Glasfasern, Kunststoff, Holz, Steinmaterialien, Beschichtungen, Verbundmaterialien, Zement und dergleichen.

Wesentlich ist hierbei eine leichte Reinigung und gegebenenfalls Desinfektion zu ermöglichen. Bevorzugt ist die Arbeitsplatte aus leicht zu reinigenden Blech, insbesondere Edelstahl.

In einer Ausführung ist die Bodenplatte an der Unterseite mit Permanentmagneten in einem Raster versehen, welches dieselben Rastermaße besitzt wie die Permanentmagnete fixiert an den Unterseiten der zu bearbeitenden Behältergefäße oder Vorrichtungen.

Die Magnete können dabei von unten angeklebt oder über eine darunter angebrachte Maske fixiert sein. Die auf der Arbeitsplatte aufgebrachten Vorrichtungen wie z.B. Kippstationen, Pipetten-Racks, Vorlagegefäße enthalten ihrerseits ebenso an deren Unterseite fixierte Permanentmagnete mit denselben Rastermaßen, so dass diese exakt übereinander stehen. Dadurch wird eine automatische Arretierung und Fixierung der Applikationen erreicht. Bei Notwendigkeit des Umbaus können die Applikationen leicht, unter Überwindung der magnetischen Anziehungskraft, entfernt und neu positioniert werden. Die Arbeitsplatte ist damit frei von Schraub- und Steckverbindungen, welche einen Durchbruch der Arbeitsplatte voraussetzen und eine zerklüftete Oberfläche zur Folge haben. Auf dieser glatten, leicht zu reinigenden Arbeitsplatte ist ein Verkriechen von ausgelaufenen Flüssigkeiten ausgeschlossen.

Weiterer Gegenstand der vorliegenden Erfindung ist oben beschriebener Roboter umfassend eine Befüllvorrichtung für Flüssigkeitsbehälter.

In einer Ausführung werden die Behälter über Schläuche befüllt, die mit Ventilen ausgerüstet sind und in denen die Flüssigkeit unter Druck steht, indem der Roboterarm mittels eines Werkzeugs die Ventile öffnet und schließt. Es handelt sich dabei um Ventile ohne Stellgerät, die durch den Roboter geöffnet werden können.

In einer Alternative werden Flüssigkeitsbehälter, wie z.B. Medientubes aus Vorratsflaschen befüllt, die bevorzugt in gekühlter Umgebung stehen und bspw. mit Druck beaufschlagt werden. Dieser führt dazu, dass die Flüssigkeit in die mit den Vorratsflaschen durch einen Schlauch verbundenen und bevorzugt temperierten Flüssigkeitsbehälter (Medientubes) gedrückt wird. Eine Schlauchklemme wirkt beispielsweise dabei als Ventil. Die Schlauchklemme ist an einer Seite eingespannt und drückt aufgrund einer definierten Federkraft gegen einen Bolzen. Zwischen Bolzen und Schlauchklemme ist der Schlauch, im geschlossenen Zustand des Ventils, abgeklemmt und lässt keine Flüssigkeit durch. Mit dem Roboterarm wird an das der Einspannung gegenüber liegende Ende heran gefahren, so dass sich die Schlauchklemme aufgrund der Krafteinleitung an der Klemmstelle vom Bolzen abhebt und den Schlauch nicht mehr zusammenquetscht. Aufgrund des angelegten Druckes in den Vorratsgefäßen kann die Flüssigkeit nun den Schlauch passieren und wird über ein fixiertes Röhrchen in den Flüssigkeitsbehälter eingeleitet, welcher sich bevorzugt in einem Temperierblock befindet. Wurde genug Flüssigkeit in den Flüssigkeitsbehälter geleitet, fährt der Roboterarm wieder zurück, so dass der Zulaufschlauch durch die Rückstellkraft wieder abgeklemmt wird.

Ein einfaches, robustes und kostengünstiges Befüllen von Flüssigkeitsbehältern ist so gewährleistet.

Ferner ist Gegenstand der Erfindung ein oben beschriebener Roboter dessen Achsen sich in einer Einhausung befinden, die über eine Absaugvorrichtung verfügt.

Kartesische Roboter, welche sich über Achsen bewegen und bspw. durch Zahnriemen oder Spindeln angetrieben werden, haben den Nachteil, dass es aufgrund der Mechanik zum Abrieb der übereinander gleitenden Elemente kommt. Diese Abriebpartikel können unkontrolliert in den Raum über der Arbeitsplatte gelangen. Durch eine Einhausung der Achsen und eine Absaugung wird dies verhindert.

Gegenstand der Erfindung ist ein oben beschriebener Roboter umfassend eine passive Drehvorrichtung für Werkzeuge. Passiv bedeutet, dass das Werkzeug lediglich durch Roboterbewegung beziehungsweise Bewegung des Roboterarms gedreht wird. In einer Ausführung ist das Werkzeug auf einer drehbaren Welle gelagert die fest mit einem Zahnrad verbunden ist. Zum Drehen wird das Zahnrad an die Zahnstange, (Z-Achse) gefahren und entlang dieser bewegt, bis der gewünschte Drehwinkel erreicht ist.

In einer Variante wird der Winkel des Werkzeugs mit einem Winkelsensor erfasst. In einer anderen Variante wird der Drehwinkel des Werkzeugs durch Messung der an der Zahnstange gefahrenen Strecke in Bezug auf eine Null-Grad-Referenzposition bestimmt.

Vorteil der passiven Drehvorrichtung ist die Verwendung schon vorhandener Komponenten und Vorrichtungen. So wird mit minimalem Aufwand bei minimalem Gewicht eine kostengünstige und robuste Drehvorrichtung zur Verfügung gestellt.

In einer Ausführung ist das Werkzeug auf einer drehbaren Welle gelagert, die fest mit einem Zahnrad oder einem Reibrad verbunden ist.

Weiterer Gegenstand der Erfindung ist der oben beschriebene Roboter umfassend eine passive Kippvorrichtung für Werkzeuge. Passiv bedeutet dass das Werkzeug lediglich durch Roboterbewegung beziehungsweise Bewegung des Roboterarms gekippt wird.

In einer Ausführung ist an einem in wenigstens einer Achse verstellbar gelagerten Werkzeug ein Ausleger z.B. in Form einer Stange angebracht. Der Ausleger wird am vorderen Ende fixiert, indem er in eine feststehende Öffnung eingefahren wird, wobei diese Öffnung z.B. mit dem abgerundeten Ende der Stange einen Kugel-Pfanne-Drehpunkt bildet, welcher einen großen Bewegungsradius in alle Richtungen gewährleistet. Durch Änderung der Position des Werkzeugs in der Z-Achse kann nun der Neigungswinkel eingestellt werden. Die arretierte Position wird durch eine die gegeneinander bewegten Flächen zusammenpressenden Feder gewährleistet, welche durch Induktion von Reibung verhindert, dass das gedrehte Werkzeug von selbst wieder in die Ausgangsposition zurück fällt.

Die Vorrichtung kann auch dazu verwendet werden, die Position einer Pipettenspitze exakt zu justieren.

In einer bevorzugten Alternative wird die Kippvorrichtung mit der Drehvorrichtung kombiniert, so dass ein Werkzeug durch Drehen und Neigen in eine beliebige räumliche Orientierung gebracht werden kann.

Die Werkzeuge können in beliebiger Reihenfolge und/oder Kombinationen eingesetzt werden. Der Roboterarm dient zugleich als Aktorelement für Nebenaggregate wie Werkzeugaufnehmer, Ventile, Kippvorrichtungen oder Magazine und zum Einstellen von Werkzeugen, wie z.B. zur Drehung oder zum Kippen eines Werkzeugs, wie z.B. eines Grippers (Greifers) oder eines Pipettenhalters.

Der erfindungsgemäße Roboter stellt ein einfaches, robustes Gerät mit hoher Präzision dar. Durch die Reduzierung der Anzahl von Antrieben, Elektroniken, Kontakten, Kabel und Schläuchen wird (im Vergleich zu konventionellen Roboter) ein besserer FIT-Wert (faults in time) und damit erhöhte Zuverlässigkeit und Verfügbarkeit erreicht.

Bevorzugt wird der Roboter als Laborroboter eingesetzt, insbesondere zum Pipetieren, Dosieren, Umfüllen von Flüssigkeiten oder Feststoffen und ähnliche Tätigkeiten.

In einer Ausführung wird in eine feststehende Öffnung (28) des Werkzeugs (26) ein Ausleger (27) eingefahren, wobei die Öffnung und der Ausleger einen Drehpunkt bilden, so dass durch Änderung der Position des Werkzeugs (26) in der Z-Achse (29) ein Neigungswinkel eingestellt wird und das Werkzeug in dieser Position durch eine die gegeneinander bewegten Flächen zusammentreffende Feder (30) arretiert wird.

Im Folgenden wird die Erfindung unter Bezugnahme auf die Figuren beispielhaft näher beschrieben.
- Fig. 1:: passiver Werkzeugwechsler
- Fig. 2:: Kippvorrichtung für Mikrotiterplatten (MTP)
- Fig. 3:: Magnethalterungen
- Fig. 4:: Befüllvorrichtung
- Fig. 5:: passive Drehvorrichtung für Werkzeuge

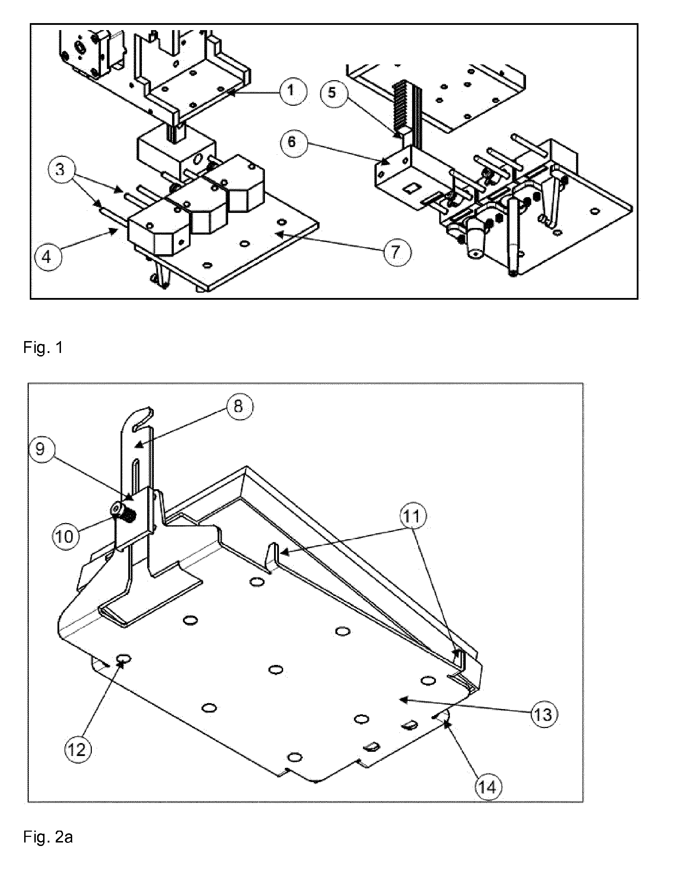

In Fig. 1 ist ein Werkzeugwechslersystem mit zwei Stiften 3 gezeigt, die als Kupplungselement und gleichzeitig als elektrische Kontakte zwischen der an der Z-Achse 5 befestigten Werkzeugaufnehmer 6 und dem Werkzeug 4 dienen. Der Werkzeugaufnehmer 6 ist am Roboterarm 1 befestigt. Ruhende Werkzeuge werden auf der Parkposition 7 abgelegt.

Die Kippvorrichtung für MTPs in Fig. 2a besteht aus einer Grundplatte 13 die seitliche 11 und rückwärtige 14 Arretierungsnippel besitzt, welche die MTPs fixieren und führen. Der Heber 8 wird durch den Roboterarm angefahren und mittels eines Hebewerkzeuges 16 in vertikaler Richtung verschoben. An der obersten Position wird die gekippte MTP dadurch gehalten, dass der Heber über eine Kunststoffplatte 9 durch Reibung gehalten wird, wobei diese eine konstante Kraft erfährt, welche über eine Schraube mit Feder 10 induziert wird. Die Bodenplatte enthält zudem Aussparungen mit Magneten 12, wobei entsprechende Gegenmagnete in die Arbeitsplatte des Roboters eingelassen sind. Somit wird die Kippvorrichtung, bzw. auch alle anderen Elemente wie bspw. Pipettenracks, Tubehalter etc., arretiert und gehalten.

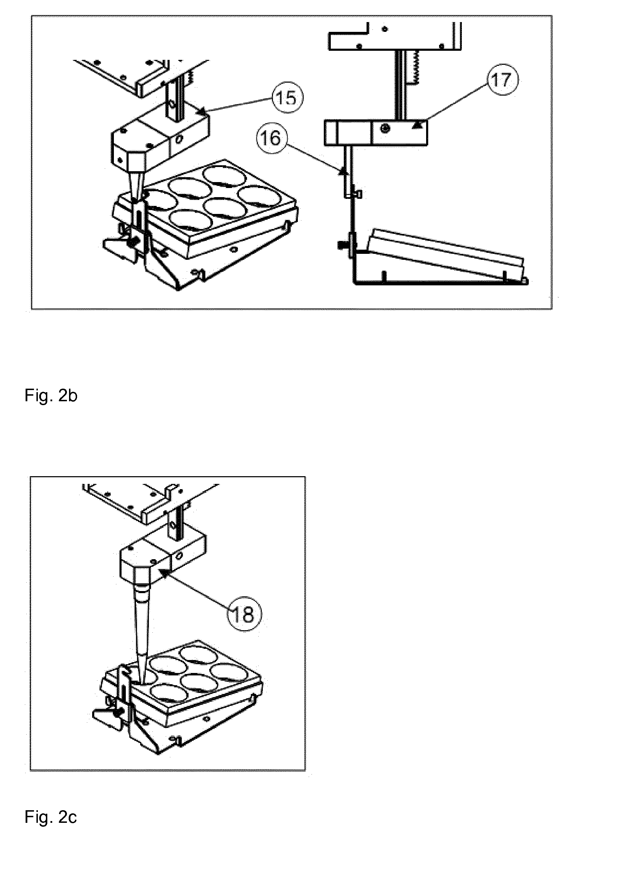

Im gekippten Zustand der MTP (Fig. 2b und c) kann bspw. der Roboterarm das Pipettenwerkzeug 18 aus dem Werkzeughalter 7 holen und Medien, aufgrund des Kippwinkels, nahezu rückstandslos aus den Wells absaugen (an der tiefsten Stelle).

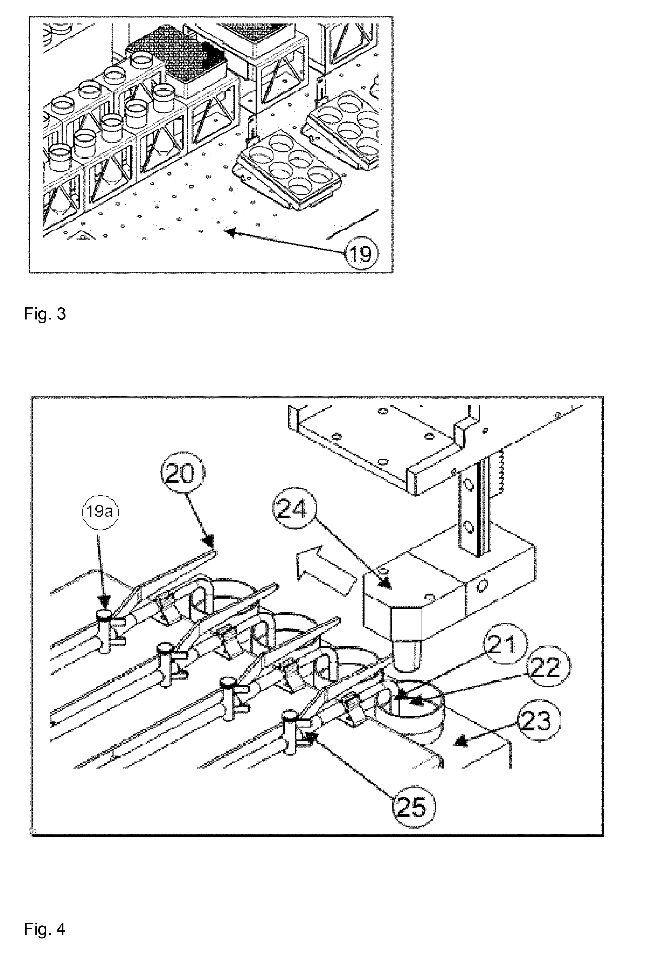

Die Arbeitsplatte des Roboters in Fig. 3 besteht aus einem leicht zu reinigenden Blech. Unter der Bodenplatte ist ein Raster aus starken Permanentmagneten 19 angeordnet. Die Magnete können dabei von unten angeklebt oder über eine darunter angebrachte Maske fixiert sein. Die auf der Roboterplattform aufgebrachten Applikation wie z.B. MTP-Kippstationen, Pipetten-Racks, Vorlagegefäße enthalten ihrerseits ebenso an deren Unterseite fixierte Permanentmagnete mit denselben Rastermaßen, wie das Magnetraster unter dem Bodenblech, so dass diese exakt übereinander stehen. Dadurch wird eine automatische Arretierung und Fixierung der Applikationen erreicht.

Der Roboterarm wird ebenfalls für die Nachfüllung von Medientubes in Fig. 4 genutzt. Vorratsflaschen stehen in gekühlter Umgebung und werden bspw. mit Druck beaufschlagt welcher dazu führt, dass Medium in die mit den Vorratsflaschen durch einen Schlauch verbunden temperierten Medientubes gedrückt wird. Bspw. wirkt eine Schlauchklemme 20 dabei als Ventil. Die Schlauchklemme ist an einer Seite eingespannt und drückt aufgrund einer definierten Federkraft auf einen Bolzen 19a. Zwischen Bolzen 19a und Schlauchklemme 20 ist der Schlauch, im geschlossenen Zustand des Ventils, abgeklemmt und lässt keine Flüssigkeit durch. Mit dem Roboterarm wird an das der Einspannung gegenüber liegende Ende heran gefahren, so dass sich die Schlauchklemme aufgrund der Krafteinleitung an der Klemmstelle am Bolzen abhebt und den Schlauch 25 nicht mehr zusammenquetscht. Aufgrund des angelegten Druckes in den Vorratsgefäßen wird das Medium nun durch den Schlauch gedrückt und über ein fixiertes Röhrchen 21 in das Medientube 22 eingeleitet, welches in einem Temperierblock 23 sitzt. Wenn genug Medium in das Medientube geleitet wurde, dann fährt der Roboterarm wieder zurück, so dass der Zulaufschlauch 25 durch die Rückstellkraft wieder abgeklemmt wird.

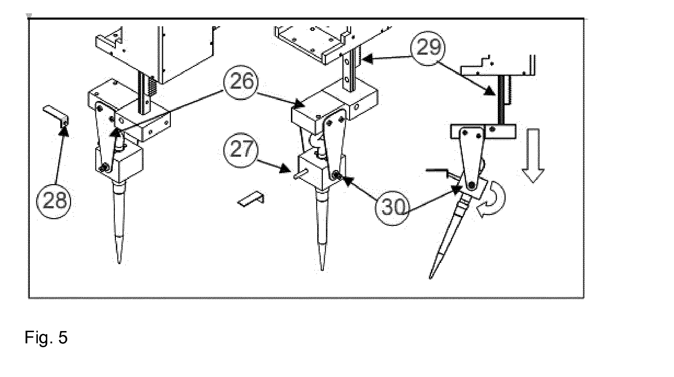

In Fig. 5 befindet sich am in wenigstens einer Achse verstellbar gelagerten Pipettenhalter 26 ein Ausleger 27 z.B. in Form einer Stange. Der Ausleger wird am vorderen Ende fixiert, indem er in eine feststehende Öffnung 28 eingefahren wird, wobei diese Öffnung z.B. mit dem abgerundeten Ende der Stange einen Kugel-Pfanne-Drehpunkt bildet, welcher einen großen Bewegungsradius (hier bis 130°) in alle Richtungen gewährleistet. Durch Verfahren der Z-Achse 29 kann nun der Neigungswinkel eingestellt werden. Die arretierte Position wird durch eine die gegeneinander bewegten Flächen zusammenpressenden Feder 30 gewährleistet, welche durch Induktion von Reibung verhindert, dass der gedrehte Pipettenkopf von selbst wieder in die Ausgangsposition zurück fällt.

## Patentansprüche

1. Roboter umfassend einen Werkzeugaufnehmer (6) und Werkzeug (4) **dadurch gekennzeichnet, dass** diese mit mindestens zwei Stiften (3) verbunden sind, die als Kupplungselement sowie gleichzeitig als elektrische Kontakte dienen.

2. Roboter nach Einspruch 1 **dadurch gekennzeichnet, dass** das Werkzeug (4) in der Arbeitsposition durch Haftmagnete gesichert wird.

3. Roboter nach Anspruch 1 **dadurch gekennzeichnet, dass** eine Pneumatikkupplung integriert ist.

4. Roboter nach Anspruch 1 **dadurch gekennzeichnet, dass** die Stifte Teil eines Zweileiter-Bussystems mit Energieübertragung sind.

5. Roboter nach einem de vorangehenden Ansprüche **dadurch gekennzeichnet, dass** für die Energieversorgung der Werkzeuge eine Gleich- oder Wechselspannung permanent zwischen den beiden Busleitungen anliegt.

6. Roboter nach einem der vorangehenden Ansprüche **dadurch gekennzeichnet, dass** die zu übertragende Information durch ein Modulationsverfahren der Versorgungsspannung überlagert wird.

7. Roboter nach einem de vorangehenden Ansprüche **dadurch gekennzeichnet, dass** sich auf dem Werkzeug und in der Roboterelektronik jeweils ein Sender und ein Empfänger für eine bidirektionale Übertragung befindet.

8. Roboter nach Anspruch 1 **dadurch gekennzeichnet, dass** er eine Kippvorrichtung für Mikrotiterplatten umfasst.

9. Roboter nach Anspruch 1 umfassend einen Feststoffmanipulator mit einem Feststoffaufnehmerelement in Form eines Spatels, das in sechs Achsen bewegt werden kann.

10. Roboter nach Anspruch 1 umfassend eine Befüllvorrichtung für Flüssigkeitsbehälter (22).

11. Roboter nach Anspruch 1 **dadurch gekennzeichnet, dass** sich die Achsen in einer Einhausung befinden, die über eine Absaugvorrichtung verfügt.

12. Roboter nach Anspruch 1 umfassend eine passive Drehvorrichtung für Werkzeuge.

13. Roboter nach Anspruch 1 umfassend eine passive Kippvorrichtung für Werkzeuge.

14. Roboter nach Anspruch 1 umfassend Werkzeuge zum Pipetieren, Greifen (Gripper), Manipulation von Feststoffen, Kippen, Befüllvorrichtung, Sortieren oder Werkzeug umfassend Sensoren, Sonden, Rührer, Dispergatoren oder optische Geräte.

15. Roboter nach Anspruch 1 **dadurch gekennzeichnet, dass** die Bodenplatte des Robotersystems eine glatte, spaltfreie Oberfläche hat und magnetische Mittel zur Fixierung der zu bearbeitenden Gefäße oder Vorrichtungen besitzt.
